(19) Europäisches Patentamt
European Patent Office
Office européen des brevets

(11) Veröffentlichungsnummer: **0 167 960**
**A2**

(12) # EUROPÄISCHE PATENTANMELDUNG

(21) Anmeldenummer: **85108155.4**

(22) Anmeldetag: **01.07.85**

(51) Int. Cl.⁴: C 08 G 12/12
C 08 G 12/42

(30) Priorität: **07.07.84 DE 3425131**

(43) Veröffentlichungstag der Anmeldung:
**15.01.86 Patentblatt 86/3**

(84) Benannte Vertragsstaaten:
**AT BE CH DE FR GB IT LI NL SE**

(71) Anmelder: **BASF Aktiengesellschaft**
**Carl-Bosch-Strasse 38**
**D-6700 Ludwigshafen(DE)**

(72) Erfinder: **Petersen, Harro, Dr.**
**Kalmitstrasse 23**
**D-6710 Frankenthal(DE)**

(72) Erfinder: **Immel, Guenther, Dr.**
**Mozartstrasse 28**
**D-6940 Weinheim(DE)**

(72) Erfinder: **Weiss, Wolfram, Dr.**
**Am Speyerweg 40**
**D-6704 Mutterstadt(DE)**

(72) Erfinder: **Schmidt, Horst, Dr.**
**Kopernikusstrasse 56**
**D-6800 Mannheim 1(DE)**

(72) Erfinder: **Busse, Gerd**
**Thomas-Mann-Strasse 28**
**D-6704 Mutterstadt(DE)**

(54) **Verfahren zur Herstellung von härtbaren veretherten Aminoplastharzen und deren Verwendung.**

(57) Die Erfindung betrifft ein Verfahren zur Herstellung von härtbaren veretherten Aminoplastharzen auf Basis von Harnstoff/Aldehyd-Polykondensaten und deren Verwendung.

Harnstoff wird zunächst mit einem α,α-Dialkylaldehyd, der bis zu 50 Mol-% durch Formaldehyd ersetzt sein kann, im Molverhältnis Harnstoff/Aldehyd von ca 1 : 2 bei Temperaturen zwischen 50 und 120°C in Gegenwart einer Säure sowie gegebenenfalls in Gegenwart eines Alkohols oder anderen organischen Lösungsmitteln umgesetzt und das bei dieser Cyclokondensation erhaltene 2-Oxo-hexahydropyrimidinderivat anschließend mit Formaldehyd in Gegenwart mindestens eines Alkohols und einer Säure kondensiert.

Diese Aminoplastharze eignen sich als Lackharze.

EP 0 167 960 A2

Croydon Printing Company Ltd.

Verfahren zur Herstellung von härtbaren veretherten Aminoplastharzen und deren Verwendung

Die vorliegende Erfindung betrifft ein Verfahren zur Herstellung von härtbaren veretherten Aminoplastharzen auf Basis von Harnstoff/Aldehyd--Polykondensaten und deren Verwendung als Lackharze.

Veretherte Aminoplastharze sind wertvolle Rohstoffe als härtbare Komponenten in säurehärtenden oder hitzehärtenden Lacken sowie in manchen Fällen als elastifizierende Harze. Sie werden meist mit Alkydharzen kombiniert. Diese Mischungen können entweder durch Wärmeeinwirkung (Einbrennlacke) oder durch Zusatz von Säuren (säurehärtende Lacke) bei Raumtemperatur bzw. erhöhter Temperatur gehärtet werden.

Die bisher bekannten veretherten Carbamid-Lackharze basieren auf Kondensationsprodukten von Harnstoff mit Formaldehyd und Alkoholen bzw. Aminotriazinen, wie beispielsweise Melamin und Formaldehyd und Alkoholen. Für die Verarbeitung von veretherten Aminoplastlackharzen werden umweltfreundliche Produkte, d.h. lösungsmittel- und formaldehydarme Harze verlangt Diese Forderung ist mit reinen Harnstoff- oder Melamin- sowie Mischharzen nur in begrenztem Umfang zu erfüllen.

Aufgabe der vorliegenden Erfindung war es, ein Verfahren zur Herstellung reaktiver veretherter Aminoplastharze aufzuzeigen, das es ermöglicht, aus billigen Ausgangsmaterialien in einfacher Weise reaktive veretherte Lackharze herzustellen, die als "Highsolid"-Harze mit den üblichen Lösungsmitteln und Additiven verträglich sind und bei der Säurehärtung oder als Einbrennlack nur wenig Formaldehyd abspalten.

Gegenstand der vorliegenden Erfindung ist ein Verfahren zur Herstellung von härtbaren veretherten Aminoplastharzen auf Basis von Harnstoff/Aldehyd-Polykondensaten, das dadurch gekennzeichnet ist, daß man zunächst Harnstoff mit einem α,α-Dialkylaldehyd der allgemeinen Formel 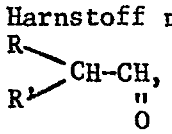 worin R und R' untereinander gleich oder verschieden sind und für Alkylgruppen mit 1 bis 6 Kohlenstoffatomen stehen, im Molverhältnis (Harnstoff/Aldehyd) von etwa 1 : 2, wobei bis zu 50 Mol-% des α,α-Dialkylaldehyds durch Formaldehyd ersetzt sein können, bei Temperaturen zwischen 50 und 120°C, gegebenenfalls unter erhöhtem Druck, in Gegenwart einer Säure sowie gegebenenfalls in Gegenwart eines oder mehrerer Alkohole und/oder anderer organischer Lösungsmittel umsetzt und das bei

dieser Cyclokonkondensation erhaltene 2-Oxo-hexahydropyrimidinderivat anschließend mit Formaldehyd in Gegenwart mindestens eines Alkohols und einer Säure sowie gegebenenfalls eines inerten Verdünnungsmittels zweckmäßigerweise bei 50-120°C kondensiert.

Das Cyclokondensationsprodukt kann zunächst hydroxymethyliert und anschließend im sauren Medium mit einem Alkohol kondensiert werden oder die Hydroxymethylierung und Kondensation des 2-Oxo-Hexahydropyrimidinderivates kann bei pH-Werten zwischen 3 und 6 gleichzeitig durchgeführt werden. So kann man beispielsweise in der 1. Stufe eine Cyclokondensation durch Umsetzung von 1 Mol Harnstoff mit 2 Mol Isobutyraldehyd zum 4-Hydroxy- oder in Gegenwart eines Alkohols zum 4-Alkoxy-5,5-dimethyl-6-isopropyl-propylenharnstoff durchführen.

Gegenstand der vorliegenden Erfindung ist außerdem die Verwendung der erfindungsgemäß hergestellten Aminoplastharze als säurehärtende Lackharze und als Einbrennlackharze.

Zum erfindungsgemäßen Verfahren und den dafür in Frage kommenden Einsatzstoffen ist im einzelnen folgendes auszuführen.

Die Herstellung der Propylenharnstoffe ist in der Literatur und in Patenten beschrieben, z.B. von H. Petersen, Angew. Chem. 76, 909 (1964), G. Zigeuner u. W. Rauter, Mh. f. chem. 96, 1950 (1965) sowie in DE-PS 1 230 805, DE-PS 1 545 610, DE-PS 1 670 085, DE-PS 1 670 087, DE-PS 1 670 089, DE-PS 1 670 093, DE-PS 1 670 094, DE-PS 1 670 129, DE-PS 1 670 130, DE-PS 1 231 247 und DE-PS 1 545 601.

Die Umsetzung derartiger 4-Hydroxy(alkoxy)-propylenharnstoffe (= 2-Oxo-hexahydropyrimidinderivate) mit Formaldehyd und Alkoholen zum Lackharz kann nach verschiedenen Verfahrensweisen durchgeführt werden. So kann man die Propylenharnstoffe zunächst mit Formaldehyd in Gegenwart von basischen Katalysatoren hydroxymethylieren und anschließend in Gegenwart eines sauren Katalysators mit Alkoholen alkoxymethylieren und zum Lackharz kondensieren. In einer besonders eleganten Verfahrensweise kann die Hydroxy- und Alkoxymethylierung sowie die Kondensation zum Lackharz in einer Stufe durchgeführt werden. Hierbei wird der in der 1. Stufe erzeugte Propylenharnstoff mit Formaldehyd im Molverhältnis 1:1-2, bevorzugt 1:1,6-2,0, in Gegenwart von mindestens 2 Mol eines Alkohols bei pH-Werten von 3,5-6 bei Temperaturen von 50 - 120°C zum Lackharz umgesetzt. Das dabei entstehende Reaktionswasser wird zweckmäßigerweise zusammen mit dem

Wasser, das durch Verwendung von wasserhaltigem Formaldehyd eingebracht wurde, durch Destillation entfernt.

Ein besonders bevorzugtes Herstellungsverfahren für ein Highsolid-Lackharz besteht darin, daß man in der 1. Stufe Harnstoff mit wäßrigem Formaldehyd, Isobutyraldehyd und z.B. Isobutanol im Molverhältnis 1:1:1:4 in schwefelsaurer Lösung zu einem Reaktionsgemisch aus 4-Hydroxy- und 4-Isobutoxy-5,5-dimethyl-propylenharnstoff umsetzt. Das erhaltene Reaktionsgemisch wird dann mit Natronlauge auf einen pH-Wert von 3,5 - 4 eingestellt und die wäßrige Phase abgetrennt. Die schwach saure organische Phase wird schließlich nach Zugabe von 1,5 - 2 Mol Formaldehyd zum Lackharz umgesetzt, wobei in der Endphase Wasser azeotrop abdestilliert wird.

Harnstoff kann in fester oder wäßriger Form oder gelöst in organischen Lösungsmitteln eingesetzt werden. Als Lösungsmittel werden zweckmäßigerweise bevorzugt die für die Veretherung verwendeten Alkohole eingesetzt.

Formaldehyd kann in wäßriger Form, als Paraformaldehyd oder in Form der Halbacetale eingesetzt werden. Es eignen sich auch Additions- bzw. Vorkondensationsprodukte von Harnstoff mit Formaldehyd, wie z.B. ®Formol.

Als α,α-Dialkylaldehyd der allgemeinen Formel 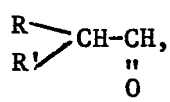 worin R und R' untereinander gleich oder verschieden sind und für Alkylgruppen mit 1 bis 6, vorzugsweise 1 bis 4 Kohlenstoffatomen stehen, können gemäß der Erfindung alle derartigen CH-aciden Aldehyde, die in α-Stellung noch ein bewegliches Wasserstoffatom aufweisen, eingesetzt werden. Bevorzugte CH-acide Aldehyde sind beispielsweise Isobutyraldehyd, α-Methyl-butyraldehyd, α-Ethyl-butyraldehyd, α-Ethylhexanal. An Stelle der Aldehyde kann man auch Stoffe einsetzen, die unter den Reaktionsbedingungen wie Aldehyde reagieren, z.B. die Halbacetale oder Vollacetale der Aldehyde.

Als Alkohole kommen für die Lackharzherstellung bevorzugt einwertige Alkohole in Betracht, z.B. Methanol, Ethanol, n- und iso-Propanol und n- und iso-Butanol oder deren Mischungen. Höhermolekulare ein- und mehrwertige Alkohole können als Elastifizierungs- bzw. Modifizierungsmittel eingesetzt werden.

Als Säuren bzw. saure Stoffe eignen sich die üblichen Wasserstoffionen abgebenden Stoffe, wie beispielsweise Salzsäure, Schwefelsäure, Salpetersäure, Oxalsäure oder p-Toluolsulfonsäure. Zweckmäßigerweise gibt man

soviel Säure für die Cyclokondensation zu, daß sich im Reaktionsgemisch ein pH-Wert zwischen etwa 0 und 3 einstellt.

Es ist vorteilhaft, die Cyclokondensation in Gegenwart eines in Wasser schwer löslichen Alkohols und/oder inerten Lösungsmittels durchzuführen. Auf diese Weise läßt sich anschließend die wäßrige Phase bequem von der organischen Phase abtrennen.

Die Hydroxymethylierung des in der 1. Stufe erzeugten Propylenharnstoffes kann auch in Gegenwart von Basen, wie beispielsweise Natron- oder Kalilauge oder Natriumkarbonat, erfolgen; vorzugsweise wird sie jedoch mit der Veretherung gemeinsam im schwach sauren Bereich durchgeführt. Die gemeinsame Hydroxy- und Alkoxymethylierung sowie die dabei stattfindende Kondensation zum reaktiven Lackharz ist eine Ausführungsform, die besonders zeitsparend und damit kostengünstig durchgeführt werden kann. In vielen Fällen erübrigt sich auch eine Restneutralisation.

Die Kondensation wird zweckmäßigerweise so durchgeführt, daß man einen Restgehalt an freien Methylolgruppen von unter 10 %, bevorzugt 3-6 % bezogen auf das 100%ige Harz, erhält. Der Gehalt an freiem Formaldehyd soll unter 0,5 %, bevorzugt zwischen 0 und 0,2 % liegen. Die Kondensation ist vorzugsweise so zu führen, daß eine 90%ige Lösung des Harzes in Isobutanol eine Viskosität von unter 10 Pa.s bei Raumtemperatur aufweist.

Die nach dem erfindungsgemäßen Verfahren hergestellten Lackharze können auf beliebigen Feststoffgehalt aufkonzentriert werden. Zu ihrer Verdünnung für die Anwendung eignen sich die üblichen Lacklösungsmittel.

Die nach dem erfindungsgemäßen Verfahren hergestellten Lackharze zeichnen sich durch sehr gute Verträglichkeiten mit den üblichen Lackbindemitteln, wie z.B. Alkydharzen, Nitrocellulose, Keton- und Aldehydharzen, Elastifizierungsmitteln, wie z.B. üblichen Weichmachern, Celluloseacetobutyrat, Polyvinylbutyral, Vinylacetat/Vinylchlorid-Mischpolymerisaten und ölmodifizierten Alkydharzen, üblichen anorganischen und organischen Pigmenten und Farbstoffen, sowie anderen in der Lacktechnik üblichen Hilfsmitteln, wie z.B. Verlaufshilfsmitteln und Härtern, wie z.B. Toluolsulfonsäure, Salzsäure, Phosphorsäure und Butylphosphorsäure aus.

Besonders hervorzuheben ist der extrem niedrige Gehalt an freiem Formaldehyd in den erfindungsgemäß hergestellten Lackharzen sowie die hohe Hydrolysenbeständigkeit, die bei der Säurehärtung oder beim Einbrennen zu einer extrem niedrigen Formaldehydabspaltung führt.

Die erfindungsgemäß hergestellten Lackharze eignen sich in Kombination mit üblichen oben bereits genannten Zusatzstoffen als Lackbindemittel zum Herstellen von Überzügen auf allen möglichen Substraten, wie z.B. Metall, Holz, Papier und Glas. Sie eignen sich sowohl als hitzehärtbare (Einbrennlacke) als auch als säurehärtende Lackbindemittel. Beim Einsatz in Einbrennlacken sind im Vergleich zu herkömmlichen Harnstoff/Formaldehyd--Harzen der hohe Feststoffgehalt in der Lieferform, der günstigere Verlauf der Verdünnungskurve und als Folge davon der höhere Feststoffgehalt bei der Spritzviskosität hervorzuheben.

Bei der Entwicklung umweltfreundlicher Lacksysteme strebt man auf dem Gebiet der Einbrennlacke höchstmöglichen Festkörpergehalt und damit geringsten Lösemittelanteil an. Der Vorteil, der hierbei durch die erfindungsgemäßen Harze erzielt wird, wird an den Beispielen 4 bis 8 gezeigt.

Die in den Beispielen genannten Teile und Prozente sind Gewichtsteile bzw. Gewichtsprozente.

Beispiel 1

In einer Rührapparatur mit starker Rückflußkühlung wird die Mischung von 45 Teilen Harnstoff, 56,25 Teilen 40%igem wäßrigem Formaldehyd, 54 Teilen Isobutyraldehyd und 222 Teilen Isobutanol bei Raumtemperatur mit 3,3 Teilen 75%iger Schwefelsäure versetzt. Das Reaktionsgemisch erwärmt sich dabei auf 50 - 55°C. Das Gemisch wird 5 Stunden auf Rückflußtemperatur unter Rühren erwärmt, wobei die Temperatur bis auf 95°C ansteigt. Nach Abkühlen auf 50°C wird mit ca. 3 Teilen 50%iger Natronlauge ein pH-Wert von 5 - 6 eingestellt und die wäßrige Phase abgetrennt. Zur isobutanolischen Phase werden 91,1 Teile 40%iger wäßriger Formaldehydlösung zugefügt. Nach Auskreisen von Wasser bei 90 - 100°C (ca. 4 Stunden) wird mit 50%iger Natronlauge neutralisiert und unter vermindertem Druck überschüssiges Isobutanol abdestilliert. Nach Zusatz von 20 Teilen Xylol werden 220 Teile eines ca. 90%igen reaktiven Lackharzes erhalten. Der Gehalt an freiem Formaldehyd beträgt 0,1 %.

Beispiel 2

540 Teile Harnstoff, 2664 Teile Isobutanol, 675 Teile 40%iger wäßriger Formaldehyd und 648 Teile Isobutyraldehyd werden in einen Rührkessel gefüllt. Der Rührkessel wird verschlossen. 65 Teile 50%iger Schwefelsäure werden unter Rühren zudosiert. Die Reaktion ist leicht exotherm. Es erfolgt im geschlossenen Rührkessel ein Druckanstieg auf 1,3 bar. Es wird eine Stunde bei 90°C gerührt. Danach wird auf 50°C abgekühlt und mit

25%iger Natronlauge ein pH-Wert von 5 eingestellt. Der Rührer wird abgestellt und nach 30 Minuten die wäßrige Phase (360 Teile) über ein Trenngefäß abgetrennt. Zur organischen Phase werden 1094 Teile 40%iger wäßriger Formaldehyd und 380 Teile Isobutanol unter Rühren eingefüllt. Bei einem pH-Wert von 5 wird unter Rückflußtemperatur Wasser ausgekreist. Danach wird mit 25%iger Natronlauge neutralisiert und das überschüssige Isobutanol abdestilliert.

Für ein gebrauchstüchtiges Lackharz werden zur Einstellung der Viskosität 380 Teile Isobutanol zugesetzt. Es werden 2347 Teile eines 85%igen Lackharzes erhalten. Der Gehalt an freiem Formaldehyd liegt bei nur 0,1 %. Dieses Highsolid-Lackharz weist eine Viskosität von 2350 m Pa.s auf.

Beispiel 3

Zu einer Mischung von 222 Teilen Isobutanol, 45 Teilen Harnstoff, 56,25 Teilen 40%iger wäßriger Formaldehydlösung und 54 Teilen Isobutyraldehyd werden 5 Teile 50%iger Schwefelsäure hinzugegeben. Das Reaktionsgemisch wird unter Rühren und Rückflußkühlung drei Stunden bis zum Sieden erhitzt, wobei die Temperatur bis auf ca. 95°C ansteigt. Nach Abkühlen auf ca. 50°C wird mit 50%iger Natronlauge neutralisiert und die wäßrige Phase abgetrennt. Zur isobutanolischen Phase werden 91,1 Teile 40%iger wäßriger Formaldehydlösung zugefügt. Nach Einstellen eines pH-Wertes von 9 - 9,5 wird 1 Stunde bei 50°C gerührt. Anschließend wird mit 50%iger Schwefelsäure ein pH-Wert von 3,8 - 4,0 eingestellt und Wasser ausgekreist. Danach wird abgekühlt, neutralisiert und unter vermindertem Druck überschüssiges Isobutanol abdestilliert. Es werden 200 Teile eines 95 - 98%igen farblosen reaktiven Lackharzes mit einem Gehalt von 0,25 % freiem Formaldehyd erhalten.

Anwendungstechnische Prüfungen der erfindungsgemäß hergestellten Aminoplastharze.

I. Einbrennlacke

Als handelsübliche Vergleichsharze A, B und C wurden

A ein mittelreaktives, isobutanolverethertes Harnstoff-Formaldehydharz, 60%ig in Isobutanol gelöst,

B ein hochreaktives, isobutanolverethertes Harnstoff-Formaldehydharz, 60%ig in Isobutanol gelöst und

C ein mittelreaktives, isobutanolverethertes Melamin-Formaldehydharz, 55%ig in Isobutanol gelöst,

eingesetzt.

Beispiel 4

Das nach Beispiel 1 hergestellte Aminoplastharz wurde als Vernetzungsmittel in einem für Grundierungen geeigneten Lack mit folgender Zusammensetzung eingesetzt:

332 Teile Alkydharz (synth. Fettsäurealkydharz, 75%ig in Xylol)
77 Teile Aminoplastharz nach Beispiel 1
96 Teile $TiO_2$ (® Kronos RN 57, Titangesellschaft Leverkusen)
196 Teile Lithopone (Pigmentfüllstoff, Lithoponekontor Köln)
1,6 Teile Flammruß 101 (Schwarzpigment, Degussa, Ffm)
96 Teile Blanc-fixe (Füllstoff auf Basis $BaSO_4$)
34 Teile Butanol

Der Lack wurde mit Xylol auf eine Spritzviskosität von 25 Sekunden Auslaufzeit (DIN-Becher 4) verdünnt und enthielt dann nicht flüchtige Anteile (2 Stunden/125°C, DIN 53 216) von 68 %.

Vergleich A

Analog zu Beispiel 4 wurde ein Grundierlack mit dem Vergleichsharz A hergestellt und ebenso auf 25 Sekunden Auslaufzeit (DIN-Becher 4) verdünnt. Die nicht flüchtigen Anteile (2 Stunden/125°C, DIN 53 216) betrugen 63 %.

Bezogen auf die flüchtigen Bestandteile, 32 % bei Beispiel 3 und 37% beim Vergleich A, werden bei Beispiel 4 14 % des Lösungsmittels eingespart.

In den folgenden Beispielen wurde das nach Beispiel 3 hergestellte Lackharz als Vernetzer in Einbrenndecklacken verwendet.

Beispiel 5

187 Teile Alkydharz (synth. Fettsäurealkyd, 75%ig in Xylol)
77 Teile Aminoplastharz nach Beispiel 3

100 Teile $TiO_2$ (Kronos RN 57)
100 Teile Xylol/Ethylglykol (8 : 2)
5 Teile Byk 300 (Verlaufmittel der Fa. Mallinckrodt, Wesel)

wurden mit Glaskugeln versetzt in einem Schüttler ("Red Devil", Hersteller: Red Devil Inc., New Jersey) 20 Minuten lang angerieben, durch Sieben von den Glaskugeln befreit und mit Xylol/Ethylglykol (8 : 2) auf eine Auslaufzeit von 20 Sekunden (DIN-Becher 4) verdünnt. Der so erhaltene Lack weist nicht flüchtige Bestandteile von 54 % (2 Stunden/125°C, DIN 53 216) auf und wurde mit einer Spritzpistole auf 1 mm starke Tiefziehbleche aufgetragen (Schichtdicke ca. 55 µm trocken). Die beschichteten Bleche wurden 5 Minuten abgelüftet und dann bei 120°C bzw. 150°C 30 Minuten lang eingebrannt.

Es wurden folgende lacktechnischen Eigenschaften ermittelt:

| Einbrenntemperatur | 120°C | 150°C |
|---|---|---|
| Glanz (nach Gardner, 60°) | 98 % | 88 % |
| Erichsentiefung (DIN 53 156) | 11,0 mm | 8,7 mm |
| Pendeldämpfung (DIN 53 157) | 67 Sek. | 165 Sek. |
| Gitterschnittprüfung (DIN 53 151) | 2,5 | 3,5 |
| Kurzbewitterung (DIN 53 387) (nach 250 Stunden): | | |
| Glanz (nach Gardner, 60°) | 73 % | 68 % |
| Kreiden (DIN 55 223) | 0 | 0 |

Vergleich B

Analog zu Beispiel 5 wurde ein Decklack mit dem Vergleichsharz B hergestellt und verarbeitet. Dabei wurden folgende Werte ermittelt:

nicht flüchtige Anteile (2 Stunden/125°C, DIN 53 216): 50 %

| Einbrenntemperatur | 120°C | 150°C |
|---|---|---|
| Glanz | 92 % | 87% |
| Erichsentiefung | 10,7 mm | 9,2 mm |

| | Einbrenntemperatur 120°C | 150°C |
|---|---|---|
| Pendeldämpfung | 32 Sek. | 91 Sek. |
| Gitterschnittprüfung | 3 | 3,5 |
| Kurzbewitterung (nach 250 Stunden): | | |
| Glanz | 72 % | 63 % |
| Kreiden | 0 | 0 |

Vergleich C

Analog zu Beispiel 5 wurde ein Decklack mit dem Vergleichsharz C hergestellt, verarbeitet und geprüft.

nicht flüchtige Anteile (2 Stunden/125°C, DIN 53 216): 50 %

| | Einbrenntemperatur 120°C | 150°C |
|---|---|---|
| Glanz | 91 % | 87 % |
| Erichsentiefung | 9,9 mm | 6,8 mm |
| Pendeldämpfung | 71 Sek. | 102 Sek. |
| Gitterschnittprüfung | 3,5 | 4,0 |

Beispiel 6

Analog zu Beispiel 5 wurde ein Decklack hergestellt, bei dem anstelle von 187 Teilen des 75%igen Fettsäurealkydharzes, 233 Teile eines in Xylol gelösten 60%igen Rizinenalkyds verwendet wurde. Die Prüfung ergab:

nicht flüchtige Anteile (2 Stunden/125°C, DIN 53 216): 50 %

| | Einbrenntemperatur 120°C | 150°C |
|---|---|---|
| Glanz | 94 % | 91 % |
| Erichsentiefung | 10,6 mm | 8,4 mm |
| Pendeldämpfung | 80 Sek. | 161 Sek. |
| Gitterschnittprüfung | 2 | 2,5 |
| Kurzbewitterung (nach 250 Stunden): | | |
| Glanz | 73 % | 59 % |
| Kreiden | 0 | 0 |

Vergleich D

Analog zu Beispiel 6 wurde ein Lack mit Vergleichsharz B hergestellt und geprüft:

nicht flüchtige Anteile (2 Stunden/125°C, DIN 53 216): 45 %

| Einbrenntemperatur | 120°C | 150°C |
|---|---|---|
| Glanz | 94 % | 90 % |
| Erichsentiefung | 9,6 mm | 8,8 mm |
| Pendeldämpfung | 73 Sek. | 122 Sek. |
| Gitterschnittprüfung | 3,3 | 2,5 |
| Kurzbewitterung (nach 250 Stunden): | | |
| Glanz | 67 % | 53 % |
| Kreiden | 0 | 0 |

Vergleich E

Analog zu Beispiel 6 wurde mit Vergleichsharz C ein Einbrennlack hergestellt und geprüft:

nicht flüchtige Anteile (2 Stunden/125°C, DIN 53 216): 45 %

| Einbrenntemperatur | 120°C | 150°C |
|---|---|---|
| Glanz | 96 % | 94 % |
| Erichsentiefung | 8,4 mm | 7,0 mm |
| Pendeldämpfung | 95 Sek. | 127 Sek. |
| Gitterschnittprüfung | 4 | 3,5 |

Die Beispiele 5 und 6 zeigen gegenüber den Vergleichen B und C bzw. D und E den deutlich höheren Feststoffgehalt der Lacke im Verarbeitungszustand, wenn ein erfindungsgemäßes Harz eingesetzt wird. Die lacktechnischen Eigenschaften erleiden dabei keine Einbußen, vielmehr wird bei hoher Einbrenntemperatur im Fall vom Beispiel 5 und 6 eine sehr hohe Härte erzielt.

Beispiel 7

Zur Darstellung des High-Solid-Charakters von Lackrohstoffen wird in der Praxis auch die sogenannte Verdünnungskurve herangezogen.

Das nach Beispiel 3 erhaltene Aminoplastharz wurde mit n-Butanol sukzessive verdünnt. Von den einzelnen Verdünnungsproben wurde die Auslaufzeit (DIN-Becher 4) und der nicht flüchtige Anteil (2 Stunden/125°C, DIN 53 216) ermittelt, wobei die Viskosität (Auslaufzeit, DIN-Becher 4) gegen den Feststoffgehalt (= nicht flüchtige Anteile; 2 Stunden/125°C; DIN 53 216) aufgetragen ist. Die Ergebnisse sind in der Figur graphisch dargestellt. Als Vergleich wurde dieses Prozedere auch auf Vergleichsharz B angewandt.

## II. Säurehärtende Lacke

Säurehärtende Alkyd-Harnstoffharz-Kombinationen werden in großem Umfang für die Holzlackierung, z.B. für Möbel oder zur Versiegelung von Parkettböden eingesetzt. Ihre Vorteile liegen in der raschen Trocknung und der guten mechanischen und chemischen Beständigkeit der aufgebrachten Lackfilme.

Ein wesentlicher Nachteil dieser Bindemittelklasse liegt in der Geruchsbelästigung, der die Verarbeiter durch die Formaldehydemission aus dem nassen Lackfilm ausgesetzt sind. Formaldehyd macht sich schon in geringen Konzentrationen durch seinen stechenden Geruch bemerkbar und ist überdies stark toxisch (MAK-Wert: 1 ppm).

Aus der Literatur sind viele Versuche bekannt, diesen Mangel zu beheben:

So wurde einerseits versucht, durch Nachbehandlung der Harnstoffharze mit formaldehydreaktiven Chemikalien, wie Natriumhydrogensufit, Wasserstoffperoxid oder Ammoniak diesen Mangel zu beheben (GB-A 1 116 087, DE-A 15 95 204 und DE-A 15 95 206). Andererseits wurde versucht, den Gehalt an freiem Formaldehyd in den Harnstoffharzen durch Destillation abzusenken (DE-A 15 95 205 und 15 95 224).

Diese Maßnahmen bleiben jedoch bei der Reduzierung der Formaldehydemission aus dem Lackfilm direkt nach der Applikation ohne den erwünschten Erfolg. In der EP-PS 43 036 wird der Zusatz von Ethylenharnstoff zum säurehärtenden Lack beschrieben. Diese Maßnahme reduziert die Emission des Formaldehyds nur um ca. 50 % und beeinträchtigt die Topfzeit des säurehärtenden Lackes.

Der Vorteil, der mit erfindungsgemäßen Harzen als Vernetzer in säurehärtenden Lacken erzielt werden kann, wird mit dem folgenden Beispiel demonstriert.

Beispiel 8

32,5 Teile des nach Beispiel 1 hergestellten Aminoplastharzes, 74 %ig in Isobutanol gelöst, wurden mit 60 Teilen Alkydharzlösung (Ricinenalkyd, 60%ig in Xylol) gemischt und mit 52 Teilen einer Mischung aus Ethanol/Ethylenglykol (2 : 1) auf 40 % Feststoffgehalt verdünnt. Nach Zusatz von 6 Teilen einer 30%igen ethanolischen Lösung von p-Toluolsulfonsäure wurde der so aktivierte Lack mit einem 180 µm-Filmziehrahmen auf Glas aufgezogen und bei 23°C und 50 % rel. Luftfeuchte gelagert. Dabei wurde nach 3, 5, 7, 24 und 48 Stunden die Pendeldämpfung nach König (DIN 53 157) ermittelt. Daneben wurde der Lack selbst beobachtet und die Zeit bei 23°C bis zum Gelieren als Topfzeit bestimmt.

Die Formaldehydemission wurde nach folgender Methode bestimmt: Der zu untersuchende Lack wird mittels Rakel auf eine gewogene Glasplatte (8 x 15 cm Kantenlänge) mit einer Naßfilmstärke von 100 µm aufgebracht und sofort in einen geschlossenen Exsiccator (Durchmesser 20 cm Nennweite) gebracht, durch welchen pro Minute 1 l Luft (23°C, 50 % rel. Luftfeuchte) strömt. Diese wird in einer Vorlage durch Wasser geleitet und ausgewaschen. Die Vorlage wird nach 0,5, 1 und 4 Stunden gewechselt, nach 24 Stunden wird die Messung beendet. Die Bestimmung des Formaldehyds in den Vorlagen erfolgt photometrisch nach der "Acetylacetonmethode". Als Bezug dient die jeweils zurückgewogene Lackmenge des 24 Stunden alten Trockenfilms.

Die Prüfergebnisse von Beispiel 7 sind in Tabelle 2 aufgeführt.

Vergleiche F, G und H

Analog zu Beispiel 8 wurden 40%ige säurehärtende Lacke hergestellt, wobei die in Tabelle 1 aufgeführten und charakterisierten marktüblichen, als formaldehydarm beschriebenen Harnstoff-Formaldehyd-Harze eingesetzt wurden. Die Verarbeitung und Prüfung erfolgte wie bei Beispiel 8 beschrieben.

Der mit dem erfindungsgemäßen Lackharz hergestellte Lack (Beispiel 8) ist in der Änderung der Pendeldämpfung den Vergleichslacken ebenbürtig, er hat jedoch eine deutlich längere Topfzeit (Tabelle 2).
In der Formaldehydemission weist dieser Lack nur 15 - 25 % der Mengen der Vergleichslacke auf, obwohl der freie Formaldehyd der eingesetzten Harnstoffharze vergleichbar war.

Tabelle 1

Zusammensetzung von formaldehydarmen Harnstoffharzen für säurehärtende Lacke

| | Nichtflüchtige Anteile (DIN 53 216) 2 Stunden/125°C | Veretherungs-alkohol | Lösungs-mittel | freier Formaldehyd |
|---|---|---|---|---|
| Vergleichsharz D für Vergleich F | 71 % | Isobutanol | Ethanol/ Butanol | 0,33 % |
| Vergleichsharz E für Vergleich G | 84 % | Butanol | Butanol | 0,13 % |
| Vergleichsharz F für Vergleich H | 60 % | Butanol | Ethanol/ Butanol | 0,37 % |

Tabelle 2 Prüfergebnisse

| Prüfung | Beispiel 7 | Vergleich F | Vergleich G | Vergleich H |
|---|---|---|---|---|
| Pendelhärte [sec. n. König] | | | | |
| nach 3 Stunden | 48 | 37 | 26 | 46 |
| nach 5 " | 71 | 65 | 55 | 68 |
| nach 7 " | 91 | 82 | 68 | 87 |
| nach 24 " | 156 | 154 | 144 | 154 |
| nach 48 " | 182 | 175 | 175 | 168 |
| Topfzeit [Tage] | 18 | 12 | 10 | 12 |

| Prüfung | Beispiel 8 | Vergleich F | Vergleich G | Vergleich H |
|---|---|---|---|---|
| Formaldehydemission [mg/g Trockenfilm] in der Zeit | | | | |
| 0 - 0,5 Stunden | 1,0 | 2,8 | 4,0 | 5,5 |
| 0,5 - 1,0 " | 0,3 | 1,7 | 3,5 | 2,0 |
| 1,0 - 4,0 " | 0,7 | 3,3 | 6,2 | 2,5 |
| 4,0 -24,0 " | 1,2 | 4,7 | 7,3 | 4,7 |
| Σ 0 -24,0 " | 3,2 | 12,5 | 21,0 | 15,7 |

Zeichn.

## Patentansprüche

1. Verfahren zur Herstellung von härtbaren veretherten Aminoplastharzen auf Basis von Harnstoff/Aldehyd-Polykondensaten, dadurch gekennzeichnet, daß man zunächst Harnstoff mit einem α,α-Dialkylaldehyd der allgemeinen Formel 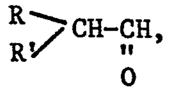, worin R und R' untereinander gleich oder verschieden sind und für Alkylgruppen mit 1 bis 6 Kohlenstoffatomen stehen, im Molverhältnis (Harnstoff/Aldehyd) von etwa 1 : 2, wobei bis zu 50 Mol-% des α,α-Dialkylaldehyds durch Formaldehyd ersetzt sein können, bei Temperaturen zwischen 50 und 120°C, gegebenenfalls unter erhöhtem Druck, in Gegenwart einer Säure sowie gegebenenfalls in Gegenwart eines oder mehrerer Alkohole und/oder anderer organischer Lösungsmittel umsetzt und das bei dieser Cyclokondensation erhaltene 2-Oxo-hexahydropyrimidinderivat anschließend mit Formaldehyd in Gegenwart mindestens eines Alkohols und einer Säure sowie gegebenenfalls eines inerten Verdünnungsmittels kondensiert.

2. Verfahren nach Anspruch 1, dadurch gekennzeichnet, daß man das Cyclokondensationsprodukt zunächst hydroxymethyliert und anschließend im sauren Medium mit einem Alkohol kondensiert.

3. Verfahren nach Anspruch 1, dadurch gekennzeichnet, daß man die Hydroxymethylierung und Kondensation des 2-Oxo-hexahydropyrimidinderivates bei pH-Werten zwischen 3 und 6 gleichzeitig durchführt.

4. Verwendung der nach den Ansprüchen 1 - 3 hergestellten Produkte als säurehärtende Lackharze und als Einbrennlackharze.

Zeichn.

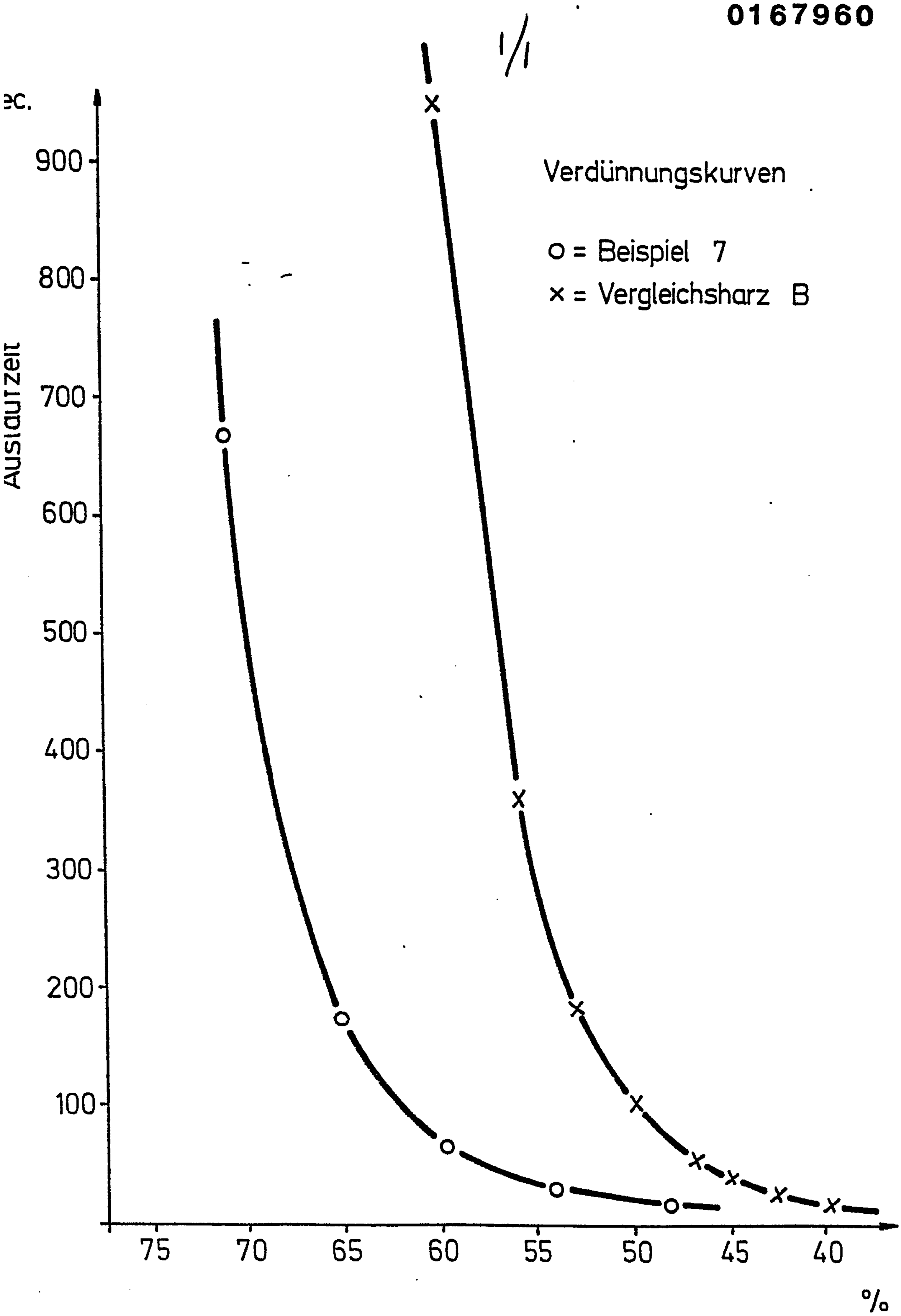

sec.
Auslaufzeit
900
800
700
600
500
400
300
200
100
75
70
65
60
55
50
45
40
%
Verdünnungskurven
o = Beispiel 7
x = Vergleichsharz B